# EUROPÄISCHE PATENTANMELDUNG

(11) **EP 2 487 286 A1**
(43) Veröffentlichungstag der Anmeldung: **15.08.2012**
(21) Anmeldenummer: 12000935.2
(22) Anmeldetag: 14.02.2012
(51) Int. Cl.: D04H 1/58, D04H 5/08, D04H 1/736, D04H 1/4218, D04H 1/4274, D04H 1/4242, B29B 11/16, B29C 70/14, B29C 70/50

(54) **Verfahren zum Herstellen von Faserhalbzeug**

(30) Priorität: 14.02.2011 DE 102011000722
(71) Anmelder: Universität Bremen, 28359 Bremen (DE)
(72) Erfinder: Dommes, Henrik, Dipl.-Ing., 28357 Bremen (DE)
(74) Vertreter: Tappe, Udo

(57) **Zusammenfassung**

Bei einem Verfahren zum Herstellen von Faserhalbzeug mit gerichteten Fasern, bei dem ein flächiges Trägermaterial (14) bereitgestellt wird, bei dem Fasern ausgerichtet auf dem Trägermaterial (14) abgelegt werden, und bei dem die Fasern auf dem Trägermaterial (14) fixiert werden, lässt sich einfach und kostengünstig ein hochwertiges Faserhalbzeug dadurch bereitstellen, dass als Trägermaterial (14) ein fluiddurchlässiges Trägermaterial aus einem Thermoplast verwendet wird.

## Beschreibung

Die Erfindung betrifft ein Verfahren zum Herstellen von Faserhalbzeug mit gerichteten Fasern, bei dem ein flächiges Trägermaterial bereitgestellt wird, bei dem Fasern ausgerichtet auf dem Trägermaterial abgelegt werden und bei dem die Fasern auf dem Trägermaterial fixiert werden.

Aus der DE 10 2008 048 334 A1 ist ein solches Verfahren bekannt. Nachteilig hierbei ist, dass sich das bekannte Verfahren nicht für die Herstellung von Faserverbundwerkstoffen mit einer Duroplastmatrix eignet. Im Einzelnen wird bei dem bekannten Verfahren eine Thermoplastmatrix verwendet. Faserverbundwerkstoffe mit einer Duroplastmatrix sind jedoch flexibler bei der Herstellung von Bauteilen verwendbar und liefern darüber hinaus eine höhere Festigkeit. Bei der Verwendung einer Duroplastmatrix ergibt sich allerdings das Problem, dass für eine Ausrichtung der Fasern mit den daraus resultierenden guten Festigkeitswerten ein Gewebe oder Gelege erfordert. Dies führt zu erheblich höheren Kosten des Fasermateriales. So sind die Kosten von Geweben oder Gelegen üblicherweise etwa fünfmal höher als die Kosten von Rovings. Darüber hinaus lässt sich bei den Nasslaminierverfahren für Duroplaste entstehender Verschnitt der verwendeten Fasergewebe oder Fasergelege im Regelfall nicht weiter verwerten. Vielmehr muss dieser Verschnitt meist aufwendig entsorgt werden.

Das der Erfindung zugrunde liegende Problem ist es deshalb, ein Verfahren zum Herstellen von Faserhalbzeug anzugeben, mit dem sich einfach und kostengünstig ein Faserhalbzeug mit gerichteten Fasern für die Verwendung mit einer Duroplastmatrix herstellen lässt.

Das Problem wird dadurch gelöst, dass bei einem Verfahren der eingangs genannten Art als Trägermaterial ein fluiddurchlässiges Trägermaterial aus einem Thermoplast verwendet wird.

Auf diesem fluiddurchlässigen Fasermaterial lassen sich Fasern gerichtet auf bekannte Weise fixieren. Auf diese Weise ist ein flächiges Fasermaterial mit gerichteten Fasern, ähnlich einem Gewebe oder Gelege, als Faserhalbzeug bereitstellbar, das längerfristig lagerbar ist und bei Bedarf auf bekannte Weise mit einer Duroplastmatrix imprägniert werden kann.

Eine Weiterbildung der Erfindung zeichnet sich dadurch aus, dass das Trägermaterial ein Vlies, Gelege oder Gewebe, insbesondere aus Polypropylen oder Polyamid ist. Auf einem derartigen Vlies, Gelege oder Gewebe lassen sich die gerichteten Fasern einfach auf bekannte Weise ablegen. Bei Verwendung eines Trägermateriales aus einem Thermoplast kann sodann eine Fixierung der Fasern auf dem Trägermaterial durch eine geeignete Pressstrecke erfolgen. Es ist aber auch möglich, das Trägermaterial unmittelbar vor dem Ablegen der gerichteten Fasern darauf zu extrudieren, so dass sich das Trägermaterial noch teilweise im Schmelzzustand befindet. Polypropylen oder Polyamid eignen sich dabei als einfach zu verwendendes und kostengünstiges Trägermaterial.

Ein anderes Ausführungsbeispiel ist dadurch gekennzeichnet, dass als Fasern Kohlenstofffasern verwendet werden, die vorzugsweise auf Stoß angeordnet werden und sich insbesondere in Faserrichtung um ein vorbestimmtes Maß überlappen. Kohlenstofffasern zeichnen sich durch besonders hohe Festigkeit aus. Bei einer Anordnung auf Stoß und insbesondere bei einer vorbestimmten Überlappung in Faserrichtung können dabei auch mit verhältnismäßig kurzen Fasern gute Festigkeitswerte erzielt werden.

Eine Ausführungsform der Erfindung zeichnet sich dadurch aus, dass das Ausrichten der Fasern mittels eines Vibrationsförderers durchgeführt wird, der insbesondere eine aufwärts gerichtete Vibrationsförderstrecke aufweist. Mittels eines derartigen Vibrationsförderers ist einerseits ein Verteilen und Ausrichten der Fasern zum flächigen Beschicken des Trägermaterials mit gerichteten Fasern möglich. Wenn darüber hinaus die Förderstrecke aufwärts gerichtet ist, lässt sich durch geeignete Prozessparameter die Länge der Förderstrecke, Steigungswinkel und Beschickungsmenge ein Zustand herbeiführen, bei dem lediglich eine Lage der Fasern gefördert wird, wobei aufeinanderfolgende Fasern jeweils auf Stoß angeordnet sind. Überschüssiges Fasermaterial in darüberliegenden Lagen wird durch die eigene Schwerkraft entgegen der Förderrichtung abwärts bewegt.

Bei der Erfindung ist es von Vorteil, wenn die ausgerichteten Fasern mittels eines Förderbandes als flächige Anordnung zu dem Trägermaterial gefördert und/oder auf diesem abgelegt werden, wobei das Förderband zum schlupffreien Fördern der Fasern mit einem Unterdruck beaufschlagt wird, der vorzugsweise in Förderrichtung abnimmt, insbesondere bis auf Umgebungsdruck. Dieses mit Unterdruck beaufschlagte Förderband sorgt dafür, dass die einmal ausgerichteten Fasern in dieser Ausrichtung und in der flächigen Anordnung bis zum Aufbringen auf das Trägermaterial verbleiben. Durch die zusätzliche Beaufschlagung mit Unterdruck durch das Förderband hindurch werden die Fasern beim Transport an das Förderband herangesaugt. Dabei ist zu Beginn beim Aufbringen der Fasern auf das Förderband ein größerer Unterdruck erforderlich, damit die Fasern hier zunächst ihre gewünschte Position erhalten. Zu einem späteren Zeitpunkt stromabwärts beim Aufbringen auf das Trägermaterial ist hingegen kein Unterdruck mehr erforderlich. Insbesondere wird das Absenken des Unterdrucks in diesem Bereich auf Umgebungsdruck dazu beitragen, dass sich die Fasern zuverlässig und reproduzierbar auf dem Trägermaterial ablegen lassen.

Es ist bei der Erfindung außerdem von Vorteil, wenn die Fasern auf dem Trägermaterial mittels einer Doppelbandpresse, einem Walzenpaar, einem Kalander, parallelen Pressplatten und/oder einem Klebefilm auf dem Trägermaterial fixiert werden. Auf diese Weise wird eine sichere Fixierung auf dem Trägermaterial erzeugt, so dass dieses mit Fasern belegte Trägermaterial als Halbzeug für die spätere Verarbeitung mit einer Duroplastmatrix einfach gelagert werden kann. Die Fasern sind dabei fest auf dem Trägermaterial fixiert. Gleichzeitig kann eine Durchtränkung des Fasermaterials mit dem Duroplastmatrixmaterial durch die Fluiddurchlässigkeit des Trägermaterials erzielt werden.

Von besonderem Vorteil bei der Erfindung ist es, wenn die Fasern, vorzugsweise aus Verschnittresten eines Vlieses, Geleges oder Gewerbes, in flächige Stücke geschnitten und insbesondere vereinzelt werden, besonders bevorzugt mittels Vibration. Auf diese Weise lassen sich Verschnittreste verwerten, um hochwertiges Faserhalbzeug zu erzeugen. Die Verwendung von in flächige Stücke geschnittenen Verschnittresten ist dabei besonders einfach und ergibt zudem ein gutes Faserhalbzeug.

Ein anderer Aspekt der Erfindung betrifft eine Vorrichtung zum Herstellen von Faserhalbzeug mit gerichteten Fasern, mit einer Ausrichtstrecke zum Ausrichten der Fasern und mit einem Aufbringabschnitt zum Aufbringen der gerichteten Fasern auf ein Trägermaterial. Mittels dieser Vorrichtung lässt sich Fasermaterial besonders wirkungsvoll ausrichten, wenn die Ausrichtstrecke einen aufwärts gerichteten Vibrationsförderer aufweist.

Es ist dabei von Vorteil, wenn ein Förderband zum Fördern der ausgerichteten Fasern als flächige Anordnung zu dem Trägermaterial vorgesehen ist, wobei das Förderband eine Unterdruckeinrichtung aufweist, die vorzugsweise das Förderband mit einem stromabwärts bis auf Umgebungsdruck abnehmenden Unterdruck beaufschlagt. Hierdurch wird ein sicherer und schlupffreier Transport des ausgerichteten Fasermaterials als flächige Anordnung bis zu dem Trägermaterial gewährleistet.

Bei einer anderen Ausführungsform ist es außerdem von Vorteil, wenn Zuführmittel zum Zuführen des Trägermaterials, vorzugsweise aus einem Vorrat, zu den Fasrn vorgesehen sind. Diese Zuführmittel erlauben eine hohe Prozessgeschwindigkeit, so dass in kurzer Zeit eine große Menge des Trägermaterials mit den Fasern versehen werden kann.

Eine andere Ausgestaltung der erfindungsgemäßen Vorrichtung ist gekennzeichnet durch eine Doppelbandpresse, einen Kalander oder ein Walzenpaar zum Fixieren der Fasern auf dem Trägermaterial. Hierdurch lassen sich einfach und zuverlässig die Fasern auf dem Trägermaterial fixieren.

Es ist außerdem von Vorteil, wenn die Vorrichtung Schneidmittel, insbesondere eine Schneidwalze und/oder Vereinzelungsmittel, insbesondere mittels Vibration, für die Fasern aufweist. Auf diese Weise können Verschnittreste wieder verwertet werden, um so hochwertige Faserhalbzeuge zu erstellen.

Ein weiterer Aspekt der Erfindung betrifft ein Faserhalbzeug mit gerichteten Fasern, bei dem zum Bereitstellen eines kostengünstigen Faserhalbzeugs auf einfache Weise die gerichteten Fasern auf einem fluiddurchlässigen Trägermaterial aus einem thermoplastischen Material angeordnet sind. Ein derartiges Faserhalbzeug stellt gerichtete Fasern für einen hochwertigen und hochfesten Faserverbundwerkstoff bereit, ohne dass ein Gewebe oder Gelege verwendet werden muss. Dabei kann das Trägermaterial ein Vlies, Gelege oder Gewebe, vorzugsweise aus Polypropylen oder Polyamid, sein. Derartige thermoplastische Trägermaterialien lassen sich einfach und kostengünstig herstellen und vorteilhaft mit den Fasern bedecken. Es hat sich dabei gezeigt, dass bei anschließender Imprägnierung dieses Faserhalbzeuges mit einem Duroplastmatrixmaterial kein nennenswerter Festigkeitsverlust durch das Trägermaterial aus einem thermoplastischen Material entsteht. Besonders vorteilhaft ist es, wenn bei dem Faserhalbzeug Fasern aus Kohlefasern, insbesondere aus Verschnittresten, vorzugsweise in Form von Flächenelementen verwendet werden. Kohlefasern sind hochfest, was zu einem besonders festen Faserverbundwerkstoff führt. Bei der Verwendung von Verschnittresten können dabei preiswerte Verbundwerkstoffe hergestellt werden, so dass hier auch Kohlefasern für weniger hochpreisige Bauteile verwendet werden können.

Nachfolgend wird ein Ausführungsbeispiel der Erfindung anhand der Zeichnungen näher erläutert. Es zeigen:
- Fig. 1: eine Vorrichtung zum Herstellen von Faserhalbzeug mit den Erfindungsmerkmalen,
- Fig. 2: eine weitere Vorrichtung zum Herstellen von Faserhalbzeug mit den Erfindungsmerkmalen, und
- Fig. 3: eine schematische Darstellung eines Flussdiagramms eines Verfahrens zum Herstellen von Faserhalbzeug als ein Ausführungsbeispiel der Erfindung.

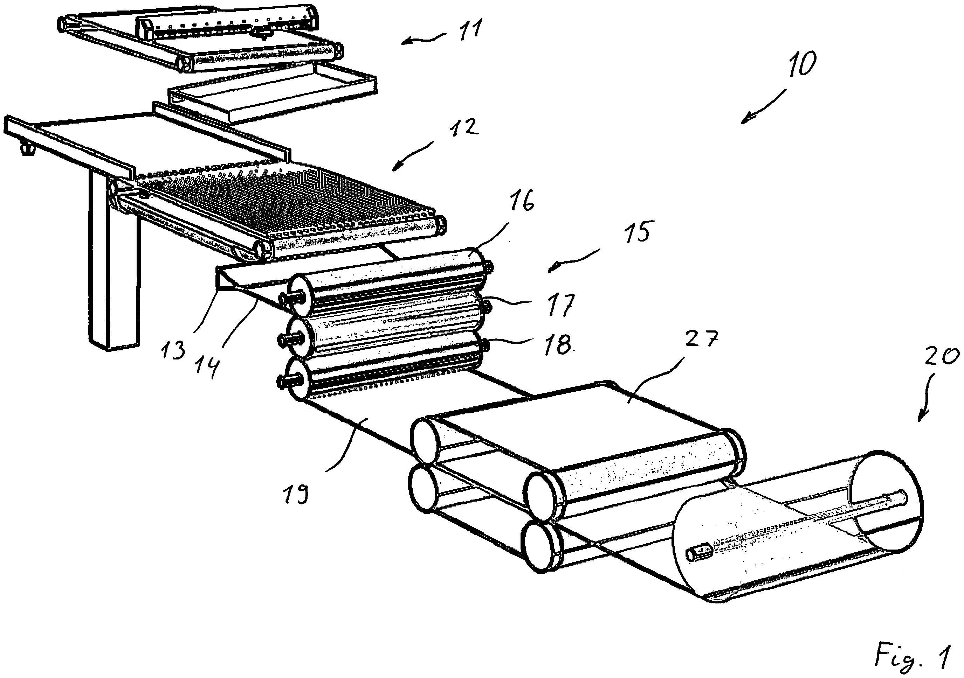

Fig. 1 zeigt eine Vorrichtung 10 zum Herstellen von Faserhalbzeug als ein Ausführungsbeispiel der Erfindung. Die Vorrichtung 10 weist dabei einen Vibrationsförderer 11, einen stromabwärts davon angeordneten Vibrationsförderer 12, einen Extruder 13 zum Herstellen des Trägermateriales 14 und eine Pressstrecke 15 auf. Die Pressstrecke 15 wird dabei aus drei beheizbaren Walzen 16, 17, 18 gebildet. Der Pressstrecke 15 nachgeschaltet ist eine Pressstrecke 27 angeordnet, die bei dem gezeigten Ausführungsbeispiel als Doppelbandpresse 27 ausgebildet ist.

Bei dem gezeigten Ausführungsbeispiel dient der Vibrationsförderer 11 zum flächigen Verteilen des diesem zugeführten Fasermateriales. Das so verteilte Fasermaterial wird dem Vibrationsförderer 12 zugeführt, der das endgültige Ausrichten der Fasern bewirkt. Am stromabwärtigen Ende des Vibrationsförderers 12 werden die ausgerichteten und flächig verteilten Fasern dem von dem Extruder 13 erzeugten Trägermaterial 14 zugeordnet. Da sich das von dem Extruder 13 erzeugte fluiddurchlässige Trägermaterial 14 zu diesem Zeitpunkt noch in einem Schmelzezustand befindet, also noch nicht vollständig ausgehärtet ist, bleiben die darauf abgelegten Fasern teilweise auf dem Trägermaterial 14 bereits kleben. Nach Durchlaufen der Pressstrecke 15 sind die Fasern dann fest auf dem Trägermaterial 14 fixiert, so dass sich stromabwärts von der Pressstrecke 15 und der Pressstrecke 27 ein flächiges Faserhalbzeug ergibt, das auf einer Rolle 20 aufgerollt wird.

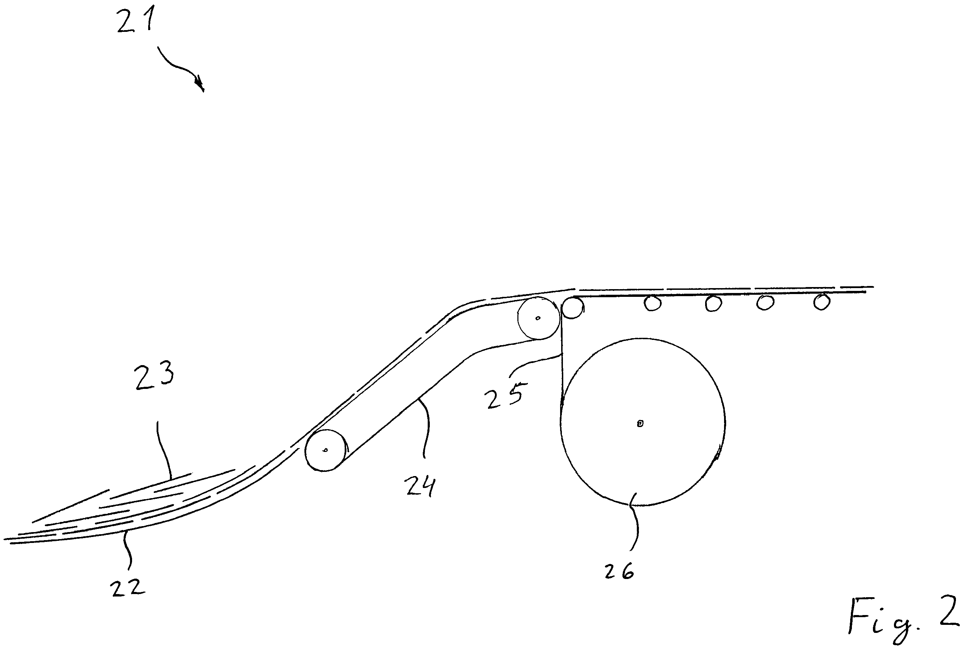

Fig. 2 zeigt ein weiteres Ausführungsbeispiel einer Vorrichtung 21 zum Herstellen von Faserhalbzeug mit gerichteten Fasern. Bei dem gezeigten Ausführungsbeispiel ist eine mindestens teilweise aufwärts gerichtete Förderstrecke eines Vibrationsförderers 22 vorgesehen, der flächige Faserelemente 23 zugeführt werden. Im Einzelnen handelt es sich bei den flächigen Faserelementen 23 um Flächenstücke, die aus Verschnittresten eines Kohlefasergewebes oder -geleges mittels einer Schnittwalze ausgeschnitten worden sind.

Stromabwärts von dem Vibrationsförderer 22 ist ein Förderband 24 angeordnet, das bei dem gezeigten Ausführungsbeispiel mit nicht in der Figur dargestellten Unterdruckeinrichtungen zusammenwirkt. Am stromabwärtigen Ende des Förderbandes wird ein Trägermaterial 25 von einer Rolle 26 bereitgestellt und kontinuierlich geführt. Bei dem Trägermaterial 25 handelt es sich um ein fluiddurchlässiges, thermoplastisches Vliesmaterial.

Im Betrieb werden die Faserelemente mit einer Größe von etwa 10 x 10 cm von dem Vibrationsförderer 22 in einer unteren Lage auf Stoß aneinandergereiht und nebeneinander positioniert. Die darüber befindlichen Faserelemente 23 rutschen durch die Schwerkraft entgegen der Förderrichtung herab, so dass lediglich eine Lage Faserelemente an das Förderband 24 übergeben wird. Durch die nicht dargestellte Unterdruckeinrichtung wird sichergestellt, dass die so angeordneten Faserelemente in ihrer Positionierung gegeneinander beim Fördern auf dem Förderband 24 nicht verrutschen. Zu einem stromabwärtigen Ende hin nimmt der Unterdruck, der die Faserelemente 23 durch das Förderband 24 hin ansaugt, bis auf Umgebungsdruck ab, so dass die Faserelemente 23 am stromabwärtigen Ende des Förderbandes 24 auf dem kontinuierlich vorbeigeförderten Trägermaterial 25 abgelegt werden. In Förderrichtung stromabwärts ist eine nicht dargestellte Pressstrecke, beispielsweise mittels eines Walzenpaares, eine Kalanders oder paralleler Pressplatten, vorgesehen, um so für eine dauerhafte Fixierung der Faserelemente auf dem Trägermaterial 25 zu sorgen.

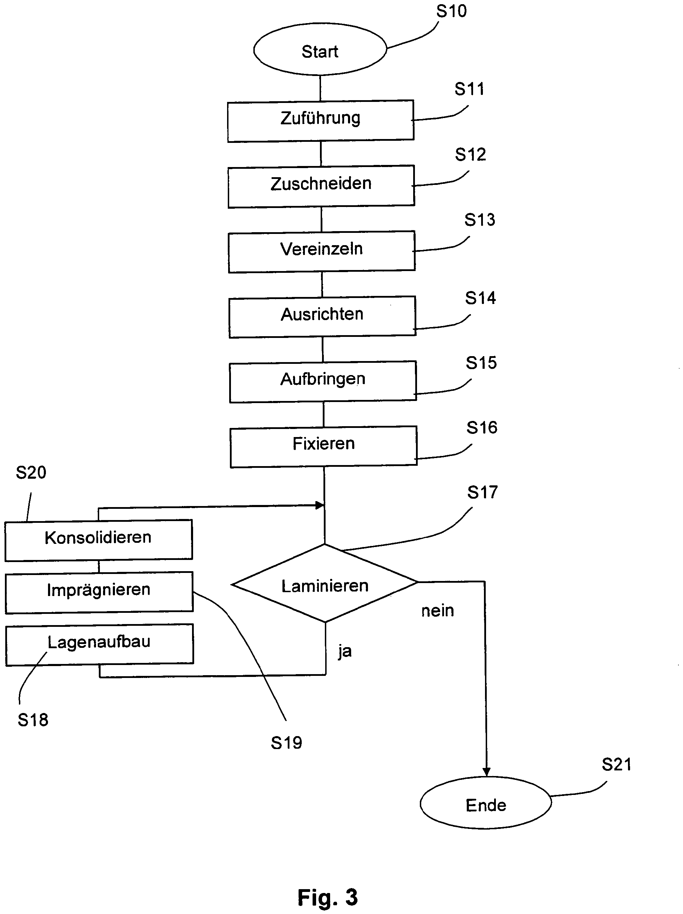

Fig. 3 zeigt eine schematische Darstellung eines Flussdiagramms eines Verfahrens zum Herstellen von Faserhalbzeug mit den Erfindungsmerkmalen. Zunächst wird das Verfahren in Schritt S10 gestartet. Es folgt sodann in Schritt S11 das Zuführen von Fasermaterialresten. Dies können beispielsweise Gelegereste oder Gewebereste von Kohlefasergeweben oder Kohlefasergelegen sein. Es ist hierbei möglich, zunächst eine manuelle Sichtung oder Klassifizierung durchzuführen, um so möglichst gleichmäßiges Faserhalbzeug zu erzeugen.

In Schritt S12 folgt sodann das Zuschneiden der Fasermaterialreste, beispielsweise in flächige Stücke von 10 x 10 cm Größe. Dies kann beispielsweise mit einer Schneidwalze erfolgen.

In Schritt S13 erfolgt bei Bedarf eine Vereinzelung der flächigen Faserelemente in einzelne Fasern. Dies kann beispielsweise mittels Vibration erfolgen. Hierdurch wird ein Auffasern der Faserenden weitgehend vermieden.

In Schritt S14 werden die Faserelemente oder die Fasern sodann beispielsweise mittels eines Vibrationsförderers ausgerichtet und anschließend in Schritt S15 auf ein Trägermaterial aufgebracht. Als Trägermaterial werden thermoplastische Trägermaterialien in flächiger Ausgestaltung verwendet, wobei das thermoplastische Trägermaterial fluiddurchlässig, insbesondere durchlässig für duroplastisches Matrixmaterial, ist.

In Schritt S16 erfolgt ein Fixieren des Fasermaterials auf dem Trägermaterial, beispielsweise mittels einer geeigneten Pressstrecke. Als nächstes folgt in Schritt S17 die Überprüfung, ob ein Laminieren erfolgen soll. Ist dies nicht der Fall, wird das Faserhalbzeug gelagert und das Verfahren in Schritt S21 beendet. Wenn in Schritt S17 festgestellt wird, dass ein Laminieren vorgenommen werden soll, folgt zunächst der erforderliche Lagenaufbau in Schritt S18. Dabei kann das Faserhalbzeug auf bekannte Weise lagenweise mit vorgegebener Orientierung aufeinander angeordnet werden.

Anschließend werden die bereitgestellten Lagen des Faserhalbzeuges in Schritt S19 mit einem geeigneten Duroplastmatrixmaterial imprägniert. Es folgt sodann in Schritt S20 die Konsolidierung. Dies kann auf bekannte Weise mit einer Walze, unter Vakuum oder im Autoklaven erfolgen. Im Anschluss daran wird in Schritt S17 überprüft, ob mit dem Laminieren fortgefahren werden soll. Ist dies der Fall, geht es in Schritt S18 weiter. Sobald in Schritt S17 festgestellt wird, dass nicht weiter laminiert werden soll, wird das Verfahren als nächstes in Schritt S21 beendet.

Mit dem beschriebenen Verfahren und den beschriebenen Vorrichtungen ist es möglich, insbesondere aus Verschnittresten stammende Fasern, insbesondere Kohlefasern als Langfasem, das heißt mit einer Länge von mehr als 1 mm, einfach und kostengünstig in gerichteter Weise lagerstabil als Faserhalbzeug bereitzustellen. Die geringfügige Verschlechterung der Festigkeit des fertigen Duroplastfaserverbundwerkstoffes kann dabei in Kauf genommen werden, da sich mit dem Verfahren erhebliche Kosteneinsparungen ergeben. Auf diese Weise kann einfach und kostengünstig hochwertiges Kohlefasermaterial auch für solche Bauteile verwendet werden, für die eigentlich dieser hochpreisige Faserrohstoff zu teuer wäre. Insbesondere für Automotiveanwendungen besteht hierzu erheblicher Bedarf.

### Bezugszeichenliste:

- 10: Vorrichtung
- 11: Vibrationsförderer
- 12: Vibrationsförderer
- 13: Extruder
- 14: Trägermaterial
- 15: Pressstrecke
- 16: Walze
- 17: Walze
- 18: Walze
- 19: Faserhalbzeug
- 20: Rolle
- 21: Vorrichtung
- 22: Vibrationsförderer
- 23: Faserelemente
- 24: Förderband
- 25: Trägermaterial
- 26: Rolle
- 27: Doppelbandpresse

## Patentansprüche

1. Verfahren zum Herstellen von Faserhalbzeug mit gerichteten Fasern, bei dem ein flächiges Trägermaterial (14, 25) bereitgestellt wird, bei dem Fasern ausgerichtet auf dem Trägermaterial (14, 25) abgelegt werden, und bei dem die Fasern auf dem Trägermaterial (14, 25) fixiert werden, **dadurch gekennzeichnet, dass** als Trägermaterial (14, 25) ein fluiddurchlässiges Trägermaterial (14, 25) aus einem Thermoplast verwendet wird.

2. Verfahren nach Anspruch 1, **dadurch gekennzeichnet, dass** das Trägermaterial (14, 25) ein Vlies, Gelege oder Gewebe, insbesondere aus Polypropylen oder Polyamid, ist.

3. Verfahren nach den Ansprüchen 1 oder 2, **dadurch gekennzeichnet, dass** als Fasern Kohlenstofffasern verwendet werden, die vorzugsweise auf Stoß angeordnet werden und sich insbesondere in Faserrichtung um ein vorbestimmtes Maß überlappen.

4. Verfahren nach einem der vorhergehenden Ansprüche, **dadurch gekennzeichnet, dass** das Ausrichten der Fasern mittels eines Vibrationsförderers (12, 22) durchgeführt wird, der insbesondere eine aufwärts gerichtete Vibrationsförderstrecke aufweist.

5. Verfahren nach einem der vorhergehenden Ansprüche, **dadurch gekennzeichnet, dass** die ausgerichteten Fasern mittels eines Förderbandes (24) als flächige Anordnung zu dem Trägermaterial (25) gefördert und/oder auf diesem abgelegt werden, wobei das Förderband (24) zum schlupffreien Fördern der Fasern mit einem Unterdruck beaufschlagt wird, der vorzugsweise in Förderrichtung abnimmt, insbesondere bis auf Umgebungsdruck.

6. Verfahren nach einem der vorhergehenden Ansprüche, **dadurch gekennzeichnet, dass** die Fasern auf dem Trägermaterial (14, 25) mittels einer Doppelbandpresse, einem Walzenpaar, einem Kalander, parallelen Pressplatten und/oder einem Klebefilm auf dem Trägermaterial (14, 25) fixiert werden.

7. Verfahren nach einem der vorhergehenden Ansprüche, **dadurch gekennzeichnet, dass** die Fasern, vorzugsweise aus Verschnittresten eines Vlieses, Geleges oder Gewebes, in flächige Stücke (23) geschnitten und insbesondere vereinzelt werden, besonders bevorzugt mittels Vibration.

8. Vorrichtung zum Herstellen von Faserhalbzeug mit gerichteten Fasern, mit einer Ausrichtstrecke zum Ausrichten der Fasern und mit einem Aufbringabschnitt zum Aufbringen der gerichteten Fasern auf ein Trägermaterial (14, 25), **dadurch gekennzeichnet, dass** die Ausrichtstrecke einen aufwärts gerichteten Vibrationsförderer (22) aufweist.

9. Vorrichtung nach Anspruch 8, **gekennzeichnet durch** ein Förderband (24) zum Fördern der ausgerichteten Fasern als flächige Anordnung zu dem Trägermaterial (14, 25), wobei das Förderband (24) eine Unterdruckeinrichtung aufweist, die vorzugsweise das Förderband (24) mit einem stromabwärts bis auf Umgebungsdruck abnehmenden Unterdruck beaufschlagt.

10. Vorrichtung nach Anspruch 8 oder 9, **gekennzeichnet durch** Zuführmittel (13,26) zum Zuführen des Trägermaterials (14, 25), vorzugsweise aus einem Vorrat, zu den Fasern.

11. Vorrichtung nach einem der Ansprüche 8 bis 10, **gekennzeichnet durch** eine Doppelbandpresse, einen Kalander oder ein Walzenpaar zum Fixieren der Fasern auf dem Trägermaterial (14, 25).

12. Vorrichtung nach den einem der Ansprüche 8 bis 11, **gekennzeichnet durch** Schneidmittel, insbesondere eine Schneidwalze, und/oder Vereinzelungsmittel, insbesondere mittels Vibration, für die Fasern.

13. Faserhalbzeug mit gerichteten Fasern, **dadurch gekennzeichnet, dass** die gerichteten Fasern auf einem fluiddurchlässigen Trägermaterial (14, 25) aus einem thermoplastischen Material angeordnet sind.

14. Faserhalbzeug nach Anspruch 13, **dadurch gekennzeichnet, dass** das Trägermaterial (14, 25) ein Vlies, Gelege oder Gewebe, vorzugsweise aus Polypropylen oder Polyamid, ist.

15. Faserhalbzeug nach Anspruch 13 oder 14, **dadurch gekennzeichnet, dass** die Fasern Kohlefasern, insbesondere aus Verschnittresten, vorzugsweise in Form von Flächenelementen (23), sind.
